# EUROPEAN PATENT APPLICATION

(11) **EP 2 537 909 A2**
(43) Date of publication of application: **26.12.2012**
(21) Application number: 12172982.6
(22) Date of filing: 21.06.2012
(51) Int. Cl.: C09K 8/528

(54) **Scale inhibition**

(30) Priority: 23.06.2011 GB 201110728
(71) Applicant: Eco Inhibitors AS, 4021 Stavanger (NO)
(72) Inventor: Kelland, Malcolm, N-4021 Stavanger (NO)
(74) Representative: de Bresser, Sara Jean

(57) **Abstract**

The resent invention provides the use of a polyamide as an oilfield scale inhibitor.

## Description

This invention relates to improvements in and relating to scale inhibition in the production conduit or completion system in a hydrocarbon (e.g. oil or gas) field.

When oil or gas is drawn from a subterranean reservoir through a well, the fluid passing into the production conduit frequently also contains water which contains dissolved salts. These dissolved salts can form a solid deposit, scale, in the production conduit thereby hindering the flow of the produced fluids. Typically, scale may comprise calcium carbonate and/or group 2 metal sulphates. For this reason, scale-inhibitors, chemicals which reduce the build up of scale, may be injected into the fluid flowing through the production conduit or even into the reservoir matrix so that they enter the production conduit with the oil, gas and water. Typically, scale inhibitors (such as Gyptron (TM) from Champion Technologies or SI-172 from Imperial Oilfield Chemicals) comprise water-soluble phosphate esters, phosphonates, aminophosphonates, polyphosphonates, phosphino polymers, polysulphonates, polyacrylates, polycarboxylates, organophosphates or chelating agents.

The potential for scale formation is exacerbated if methanol or glycol hydrate inhibitors are injected into the hydrocarbon flow.

Thus there is a need for a material which can function both as a scale inhibitor and a hydrate inhibitor, particularly one which is environmentally tolerable, e.g. biodegradable.

We have now found that polyamides may also be used successfully as scale inhibitors, and simultaneously as hydrate inhibitors, at concentrations well below those of conventional scale inhibitors.

Thus viewed from one aspect the invention provides the use of a polyamide as an oilfield scale inhibitor. In a preferred aspect, the invention provides the use of a polyamide as an oilfield scale inhibitor and hydrate inhibitor.

The invention also provides a process for inhibiting scale formation (and preferably also hydrate formation) in an oilfield using a polyamide. Preferably the polyamide is injected into a hydrocarbon production well and/or into the reservoir matrix surrounding a hydrocarbon production well.

Viewed from a further aspect the invention provides a process for inhibiting scale formation in an oilfield production conduit or completion system, said process comprising injecting a scale inhibitor into the reservoir matrix surrounding a hydrocarbon production well, characterised in that said scale inhibitor is a polyamide.

Viewed from a still further aspect the invention provides a process for inhibiting scale formation in an oilfield production conduit or completion system, said process comprising injecting a scale inhibitor into a hydrocarbon production well, characterised in that said scale inhibitor is a polyamide.

By an "oilfield scale inhibitor" is meant a material used to inhibit scale in hydrocarbon conduits within and leading from hydrocarbon reservoirs, i.e. including oil reservoirs and/or gas reservoirs.

By "oilfield" is meant herein a hydrocarbon, i.e. gas and/or oilfield.

The conduits into which the polyamide scale inhibitor is injected or into which it will flow are hydrocarbon conduits extending for at least part of the length from the site within a well at which hydrocarbon enters the borehole to the facility remote from the well at which hydrocarbon compositions are processed to remove unwanted components or to crack and/or fractionate the hydrocarbons.

The polyamide scale inhibitor used according to the invention may be a single compound, or more typically a mixture of compounds. It will be water and/or oil soluble and such solubility may readily be achieved by appropriate substitution of the polymer backbone with hydrophilic and/or lipophilic groups.

Preferably, the polyamide scale inhibitor used according to the invention is environmentally tolerable, e.g. biodegradable.

By "polyamide" is meant herein a polymer containing a plurality of amide (-CONR-, when R = H or an optionally substituted hydrocarbyl group) bonds in the molecular backbone, e.g. 4 to 10000 such bonds, preferably 6 to 1000, more especially 10 to 100 such bonds. The remaining backbone bonds are preferably carbon-carbon bonds. The weight average molecular weight of the polyamide will generally be in the range 500 Da to 1 MDa, e.g. 900 Da to 20 kDa, especially 1 kDa to 10 kDa, more especially 1.5 to 2 kDa.

Preferably the polyamide scale inhibitor is a polymer comprising monomer units of formula I

-Y-C(R₂)-X-CO-NH- (I)

where Y and X independently are each a bond or a spacer moiety (e.g. a group providing a backbone chain of up to ten atoms, preferably carbon atoms, for example a methylene or polymethylene group); and
each R independently is hydrogen or a hydrophilic or lipophilic group, preferably a group containing up to 20 carbons, particularly 1 to 12 carbons, and preferably at least one nitrogen and/or oxygen (for example an optionally substituted carboxyl or amide group optionally attached via a C₁₋₆ alkylene group) or CR₂ together forms an optionally substituted C₅₋₇ carbocyclic ring.

The scale inhibitor is preferably a polymethacrylamide, especially a poly(alkyl or dialkyl methacrylamide).

Particularly preferred compounds according to the invention are polyaspartamides, e.g.:
Pasp 23:77 iBu:Me
Pasp 75:25 iBu:NaOH
Pasp 75:25 iBu:Me
Pasp 90/10 iBu:DMPA
Pasp 80/20 iPe:DMPA
"Pasp 75:25 iBu:Me" means a polyaspartamide made from polysuccinimide,75 mol% isobutylamine and 25% mol% methylamine. DMPA means 3-dimethylaminopropylamine.

Examples of these are exemplified in Examples 1 and 2 herein.

The polyamide scale inhibitor is preferably also a corrosion inhibitor. The polyamide scale inhibitor is preferably also one which has no cloud point in distilled water at temperatures up to 100°C.

In the polyamide, the monomer units of formula I may make up the whole or the majority or, less preferably, a minority of the overall polymer and may be positioned randomly or in blocks throughout the overall polymer. Preferably units of formula I make up 5-1 00%mole (relative to all monomer residues) of the overall polymer. The overall polymer may be linear, branched or cross-linked.

In the monomer groups of formula I, each Y is preferably a bond and in each CR₂ group one R is preferably hydrogen, the other being a group -Z-CONR¹₂ or -Z-COOR², where Z is a bond or a spacer moiety providing a backbone chain of up to 6 carbons, for example a methylene, ethylene or propylene group, each R¹ independently is hydrogen or an optionally substituted C₁₋₆ alkyl group (e.g. a hydroxyl or amino substituted alkyl group), and R² is hydrogen or a countercation, (e.g. a metal or quaternary ammonium cation).

Thus in preferred embodiments, the monomer units of formula I may be of formulae II to VII

-CH(CONR¹₂)-CH₂-CO-NH- (II)

-CH(COOR²)-CH₂-CO-NH- (III)

-CH(CH₂CONR¹₂)-CH₂-CO-NH- (IV)

-CH(CH₂COOR²)-CH₂-CO-NH- (V)

-CH(CH₂CONR¹₂)-CO-NH- (VI)

-CH(CH₂COOR²)-CO-NH- (VII)

where R¹ is an optionally substituted alkyl group, it is preferably a methyl, ethyl, isopropyl, isobutyl or isopentyl optionally substituted by a hydroxyl, carboxyl, substituted carboxyl, amino, C₁₋₆ alkylamino or di-C₁₋₆ alkylamino group. Preferably one of the groups R¹ is hydrogen and the other i-Pr, i-Bu, or i-pentyl. Optionally in some of the groups one R¹ is hydrogen and the other is methyl.

Units of formulae II and/or IV and/or VI preferably make up 5-100% mole (relative to total monomer residues) of the overall polymer.

In one embodiment of the invention the polymers contain 2 structural units of Formula I wherein one structural unit has a spacer group X which is methylene and the other has a spacer group X which is a bond, and in which both spacer groups Y are bonds.

In another embodiment of the invention the polyamide scale inhibitors are polyaminoacids, proteins, peptides or derivatives of such. Such polymers are not necessarily anti-freeze proteins which are natural proteins designed to inhibit the formation of ice crystals in fish, insects etc. The polymers may or may not be derived from proteinogenic amino acids.

In another embodiment the polyamide scale inhibitors contain 5-100 Mol-% of structural elements of formula I, preferably ones in which X and Y are bonds.

Particularly preferably in some units of formula I, one group R is hydrogen and the other contains 1-5 carbons, e.g. as a linear or branched alkyl group or both groups R and the carbon to which they are attached together form a cyclic group, e.g. a cyclopentyl ring.

Preferably also, some of the units of formula I may be of formula II or IV (or VI) and other of formula III or V (or VII).

Particularly preferred polyamide scale inhibitors for use in the invention may simply be produced by reacting homo- or copolymers of cyclic imides (e.g. succinimide) with one or more alkylamines or dialkylamines and optionally thereafter hydrolysing any remaining cyclic imide groups to yield carboxyl group containing side chains. Examples of suitable alkylamines and dialkylamines for use in this regard include methylamine, dimethylamine, ethylamine, diethylamine, n-propylamine, isopropylamine, iso-butylamine, n-butylamine, t-butylamine, n-pentylamine, iso-pentylamine and cyclopentylamine, diethanolamine, monoethanolamine, dipropanolamine, monopropanolamine, 3-(dimethylamino)propylamine and 2-(dimethylamino)ethylamine.

The polyamide scale inhibitors may be used according to the invention, e.g. coformulated with, other agents having beneficial properties in terms of protecting hydrocarbon conduits, enhancing scale or hydrate inhibition, etc. Particularly suitably, a synergist, a compound capable of enhancing the scale or hydrate inhibiting properties of the polyamide may be used.

Examples of synergists include polymers and copolymers of N-vinylcaprolactam, N-vinyl-pyrrolidone and alkylated vinylpyrrolidones, alkyl- and dialkylacrylamide polymers and copolymers, hyperbranched polymers (e.g. dendrimers) including polyesteramides, polymers and copolymers of maleic anhydride, which have been reacted with alkylamines to form imide or amide groups, polysaccharides and derivatives of such including sugars and starches, polyoxyalkylenediamines, small alcohols, small glycol ethers or ketones, amphiphilic molecules with molecular weight of less than 1000 Daltons, proteins and polypeptides.

By "small" in this context is meant having a molecular weight below 1 kDa.

Preferred small glycol ethers include n-butoxyethanol, iso-butoxyethanol, n-butoxypropanol or iso-butoxypropanol. These can also serve as solvents for the polyamides.

Preferred amphiphilic molecules include quaternary ammonium surfactants.

Thus viewed from a further aspect the invention provides an oilfield scale inhibitor composition comprising a polyamide oilfield scale inhibitor together with a synergist selected from the group consisting of polymers and copolymers of N-vinylcaprolactam, N-vinyl-pyrrolidone and alkylated vinylpyrrolidones, alkyl- and dialkylacrylamide polymers and copolymers, hyperbranched polymers (e.g. dendrimers) including polyesteramides, polymers and copolymers of maleic anhydride, which have been reacted with alkylamines to form imide or amide groups, polysaccharides and derivatives of such including sugars and starches, polyoxyalkylenediamines, small alcohols, small glycol ethers or ketones, amphiphilic molecules with molecular weight of less than 1000 Daltons, proteins and polypeptides.

The polyamides used according to the invention may also serve to inhibit hydrate formation and/or aggregation, preferably in addition to inhibiting scale formation. The combined use as scale and hydrate inhibitors is therefore a preferred aspect of the uses, methods, processes and products herein described.

The polyamides used according to the invention may also serve to protect against corrosion, i.e. in some cases it may be unnecessary to use another molecule as a specific corrosion inhibitor if the materials used according to the invention can do this job. Alternatively, lesser quantities of corrosion inhibitor may be necessary due to the partial protection provided by the materials used according to the invention.

Preferred embodiments of the invention will now be described with reference to the following non-limiting Examples.

### Example 1

### Polyamide scale inhibitor production

9.70g (0.1 mole) of polysuccinimide and 100 ml of dimethylformamide were put into a 250 ml flask equipped with a stirrer. When the polymer had dissolved by warming, the solution was cooled to 20°C and 5.848g (0.06 mole) of isobutylamine dissolved in 60ml of 2.0 M methylamine in tetrahydrofuran was added dropwise at ambient temperature over a period of 30 minutes. After the addition, the mixture was stirred for a further 2 hours at 60-70°C, and the resulting mixture was poured into excess

diethyl ether to precipitate the ring-opened polymer. The polymer was washed with diethyl ether and dried *in vacuo* to yield the polyamide scale inhibitor.

Other polymers were made analogously using a solvent or solvent mixture in which the polysuccinimide was at least partially soluble, and one or more amines or diamines.

### Example 2

### Scale Inhibition Tests

A high pressure dynamic tube blocking rig was used to test the polyamides for scale inhibition performance. This is an automated scale inhibitor dynamic test rig assembled and purchased from Scaled Solutions, Scotland. The heart of the rig consists of 3 pumps which can pump fluids up to 10ml per minute through a microbore coil of 316 steel. This coil is placed in a heated oven and is 3 meters long with 1 mm internal diameter. The initiation and rate of scaling occurring in the coil is measured by recording the differential pressure across the coil. All data are collected on a PC using Labview 8.0 software. The rig is designed for temperatures between 20-200°C and pressures up to 300 bar (ca. 4200 psi). All experiments described in this work were carried out at 100°C and 80 bar. At this temperature Luvicap 55W is not water-soluble, even in fresh water. The products used in experiments 4-6 in the gas hydrate equipment (see Example 4 below) were soluble at this temperature which is a further advantage of the polyamide additives of this invention. High temperatures may be encountered in the field and it may be important that the additives are soluble in the aqueous phase at these temperatures.

The dynamic scale inhibitor test equipment was set up to automatically carry out four stages of testing in each experimental run:
● A blank test with no scale inhibitor
● A series of tests with scale inhibitor for one hour each at decreasing concentrations
● A repeat test with the scale inhibitor starting at the previous concentration that led to rapid scale formation in the first series of scale inhibitor tests
● A second blank test with no scale inhibitor

Pump 1 is used to inject scaling cations (Brine 1), Pump 2 is used to inject scaling anions (Brine 2) as well as the coil cleaning solutions and Pump 3 is used to inject scale inhibitor solution. The software can be automatically set to reduce the scale inhibitor concentration, which for our experiments was every hour. For example, the scale inhibitor concentrations might begin at 100ppm and decrease to 50, 20, 10, 5, 2 and 1ppm every hour until scale formation occurs. Rapid scale formation due to failure at any particular scale inhibitor concentration is taken as the point when the differential pressure increases to over 0.5 bar (7 psi). This is referred to herein as the fail concentration (FIC) of the scale inhibitor, not the minimum inhibitor concentration (MIC). This is to avoid confusion with the operational use of the term MIC defined as the minimum inhibitor concentration which prevents scale formation. If a chemical failed at the first and highest concentration injected, the test was repeated at higher concentrations to make sure the true fail concentration was determined.

Model aqueous produced fluids were used. The compositions of Brines 1 and 2 to make calcium carbonate and barium sulphate scales are given in Tables 1 and 2 respectively. In all experiments a 50/50 mixture of Brine 1 and 2 was injected.

**Table 1: Salts used to make Brines 1 and 2 for calcium carbonate scaling.**

| Ion | ppm | Component | Brine 1 (g/5L) | Brine 2 (g/5L) |
|---|---|---|---|---|
| Na⁺ | 39020 | NaCl | 247.97 | 247.97 |
| Ca²⁺ | 2040 | CaCl₂·2H₂O | 37.42 | |
| Mg²⁺ | 530 | MgCl₂·6H₂O | 22.16 | |
| K⁺ | 1090 | KCI | 10.39 | |
| Ba²⁺ | 570 | BaCl₂·2H₂O | 5.07 | |
| Sr²⁺ | 290 | SrCl₂·6H₂O | 4.41 | |
| HCO₃⁻ | 500 | NaHCO₃ | 0 | 13.76 |
| Fe²⁺ | 25 | FeCl₂·4H₂O | 0.89 | |

**Table 2: Salts used to make Brines 1 and 2 for barium sulphate scaling.**

| Ion | ppm | Component | Brine 1 (g/5L) | Brine 2 (g/5L) |
|---|---|---|---|---|
| Na⁺ | 15200 | NaCl | 193.19 | 175.18 |
| Ca²⁺ | 724 | CaCl₂·2H₂O | 26.56 | |
| Mg²⁺ | 807 | MgCl₂·6H₂O | 68.28 | |
| K⁺ | 502 | KCI | 9.58 | |
| Ba²⁺ | 142.5 | BaCl₂·2H₂O | 2.53 | |
| Sr²⁺ | 72.5 | SrCl₂·6H₂O | 2.21 | |
| SO₄²⁻ | 1480 | Na₂SO₄ anhydrous | 0 | 21.88 |
| Fe²⁺ | 25 | FeCl₂·4H₂O | 0.89 | |

The scale inhibition results are as set out in Table 3 below:

**Table 3**

| Polymer | Fail Concn. (BaSO₄) | Fail Concn. (CaCO₃) |
|---|---|---|
| Commercial Polyaspartarte | 5ppm | 1 ppm |
| Pasp 75:25 iBu:NaOH | 50ppm | 20ppm |
| Pasp 75:25 iBu:Me | 250ppm | 50ppm |
| Pasp 90/10 iBu:DMPA | 100ppm | 25ppm |
| Pasp 80/20 iPe:DMPA | 500ppm | 100ppm |

All additives except the commercial polyaspartate (Pasp) are within the scope of this invention.

Clearly, the commercial polyaspartate containing only peripheral carboxylate groups is the best scale inhibitor. But if the polyamide additives of this invention are simultaneously used as hydrate inhibitors, they will be injected at several thousand ppm, often 2000-6000ppm, to prevent hydrate formation. Thus when a polyamide additive at these high concentrations there is more than enough of the polyamide to also prevent scale formation.

### Example 3

### Seawater Biodegradation Test

Marine biodegradation was experimentally measured according to the OECD 306 Closed Bottle Method. Briefly, fresh seawater samples were taken from 70 m depth at Byfjord, Stavanger, transported to the lab within the hour and kept at ambient temperature in the dark. 350 or 250 ml (depending on the initial concentration) aliquots were transferred to pre-washed 510 ml dark bottles, spiked with 2ml non-ammonium (ammonium replaced by nitrate) Bushnell-Haas nutrient solution (content per litre: 0.2 g MgSO₄, 0.02 g CaCl₂, 2.0 g K₂HPO₄, 2.0 g NaNO₃, and 0.05 g FeCl₃. adjusted to pH 8.0), and volumes of sample bringing the initial concentration of test polyamide compounds to 100 mg/l. Sample bottles were closed by OxiTop-C screw cap measuring heads (WTW, Wissenschaftlich-Technische, Germany) equipped with saturated NaOH headspace solution for CO₂ trapping, and incubated at 20ºC under continuous mixing. BOD (biological oxygen demand) bottles were prepared according to the vendor's guidelines for a BOD 28 days' test. The sample heads correlate the oxygen consumption with the partial pressure reduction in the closed headspace, providing continuous oxygen readings without opening the system. All samples received nutrient solution. Glucose (initial concentration 100 mg/l) was used for positive control, while acidified (addition of 4 M H₂SO₄ to pH<2) and autoclaved sample bottles (containing test sample) served as negative controls. Positive controls and test samples were tested in duplicates. Theoretical oxygen demand (ThOD) was calculated based on the chemical composition of the tested chemicals.

Table 4 shows the results of the ThOD and the measure BOD values for the tested chemicals, standards and controls, and the degradation degree. As this method is based on a degradation model not including growth, Table 4 also shows the theoretical biological oxygen demand (ThBOD), estimated heterotrophic growth yields (*Y*_{x/s}) of 0.67 g COD/g COD for glucose and 0.5 g COD/g COD for tested chemicals (estimated based on the degree of reduction of carbon in substrates according to the literature). Based on the degradation model including growth, Table 4 shows the ThBOD and the percent degradation based on the BOD/ThBOD ratio. According to the OECD 306 method, neither the control (glucose) nor the polyamide additive of Example 1 are readily biodegradable. By including growth (using the above given biomass yield coefficients) however, ready degradation is found also for the control (glucose) and the Example 1 additive.

**Table 4: Biodegradation results.**

| Test Compound | ThOd₂₈ No growth (mg/l) | ThBOD₂₈ including growth (mg/l) | BOD₂₈ (mg/l) | % 28 day Biodegradation according to OECD306 | % 28 day biodegradation including growth |
|---|---|---|---|---|---|
| Seawater | 0 | 0 | 1.9 | 0 | 0 |
| Glucose | 107 | 35 | 33.3 | 29 | 89 |
| Example 1 | 155 | 77 | 47.5 | 29 | 60 |

### Example 4

### Hydrate Inhibition Equipment and Test Procedure

To evaluate the performance as hydrate inhibitors of the polyamides used according to the invention, the tests described in this Example used a jacketed high pressure 200ml steel cell.

The same procedure for preparation and filling of the cell was followed in all experiments. All tests were performed on distilled water and synthetic natural gas (SNG) forming a Structure II hydrate (Table 5).

**Table 5: Composition of synthetic natural gas (SNG).**

| Component | mole % |
|---|---|
| Methane | 80.67 |
| Ethane | 10.20 |
| Propane | 4.90 |
| *Iso*-butane | 1.53 |
| *n*-butane | 0.76 |
| N₂ | 0.10 |
| CO₂ | 1.84 |

A description of the general test procedure is given below:
1) The inhibitor to be tested was dissolved or dispersed in distilled water to an active concentration of 5000ppm.
2) The magnet housing of the cell was filled with the aqueous solution containing the inhibitor to be tested. The magnet housing was then mounted in the bottom end piece of the cell, which was thereafter attached to the steel tube and the cell holder.
3) The desired amount of the aqueous solution containing dissolved inhibitor was placed in the cell (above the cell bottom) using a pipette, the top end piece was fitted.
4) The temperature of the cooling bath was adjusted to 19.5°C, just outside the hydrate region at the pressure conditions to be used in the experiment.
5) The cell was purged twice with the SNG with stirring.
6) The data logging was started, and the cell was loaded with the SNG to 76 bar pressure while stirring at 600 rpm.
7) When the temperature and pressure in the cell had stabilised the cell was cooled from 20.5°C and 76 bar to 2°C over 18.5 hours at 600rpm stirring.

The onset temperature (To) for hydrate formation was recorded as the first drop in pressure not due to the temperature drop in a closed system. Each additive was tested at least 4 times and the average To determined. The results are as set out in Table 6 below:

**Table 6**

| Experiment | Additive | Average To |
|---|---|---|
| 1 | No additive | 18.1 |
| 2 | Commercial polyaspartate | 18.0 |
| 3 | Luvicap 55W | 12.0 |
| 4 | Pasp 75:25 iBu:Me | 12.1 |
| 5 | Pasp 90/10 iBu:DMPA | 11.2 |
| 6 | Pasp 80/20 iPe:DMPA | 10.7 |

### Experiments 4-6 are within the scope of this invention.

Pasp 75:25 iBu:Me means a polyaspartamide made from polysuccinimide,75 mol% isobutylamine and 25% mol% methylamine. DMPA means 3-dimethylaminopropylamine. The last two polymers in the table show a small improvement on the original 75:25 iBu:Me polyaspartamide. They also perform a little better than a commercial KHI, Luvicap 55W from BASF. A commercial polyaspartate scale inhibitor from NanoChem Solutions Inc. was also tested and gave very poor results, about the same as using no inhibitor at all.

## Claims

1. The use of a polyamide as an oilfield scale inhibitor.

2. A process for inhibiting scale formation in an oilfield using a polyamide.

3. A process for inhibiting scale formation in an oilfield production conduit or completion system, said process comprising injecting a scale inhibitor into the reservoir matrix surrounding a hydrocarbon production well, **characterised in that** said scale inhibitor is a polyamide.

4. A process for inhibiting scale formation in an oilfield production conduit or completion system, said process comprising injecting a scale inhibitor into a hydrocarbon production well, **characterised in that** said scale inhibitor is a polyamide.

5. An oilfield scale inhibitor composition comprising a polyamide oilfield scale inhibitor together with a synergist selected from the group consisting of polymers and copolymers of N-vinylcaprolactam, N-vinyl-pyrrolidone and alkylated vinylpyrrolidones, alkyl- and dialkylacrylamide polymers and copolymers, hyperbranched polymers including polyesteramides, polymers and copolymers of maleic anhydride, which have been reacted with alkylamines to form imide or amide groups, polysaccharides and derivatives of such including sugars and starches, polyoxyalkylenediamines, small alcohols, small glycol ethers or ketones, amphiphilic molecules with molecular weight of less than 1000 Daltons, proteins and polypeptides.

6. A use, process or composition as claimed in any one of claims 1 to 5 wherein said polyamide contains 5-100%mole (relative to total monomer residues) of monomer residues of formula I
-Y-C(R₂)-X-CO-NH- (I)
where Y and X independently are each a bond or a spacer moiety (e.g. a group providing a backbone chain of up to ten atoms, preferably carbon atoms, for example a methylene or polymethylene group); and
each R independently is hydrogen or a hydrophilic or lipophilic group, preferably a group containing up to 20 carbons, particularly 1 to 12 carbons, and preferably at least one nitrogen and/or oxygen (for example an optionally substituted carboxyl or amide group optionally attached via a C₁₋₆ alkylene group) or CR₂ together forms an optionally substituted C₅₋₇ carbocyclic ring.

7. A use, process or composition as claimed in claim 6 wherein said polyamide is a polymethacrylamide.

8. A use, process or composition as claimed in claim 7 wherein said polymethacrylamide is a poly(alkyl or dialkyl-methacrylamide).

9. A use, process or composition as claimed in any one of claims 1 to 5 wherein said polyamide is a polyaspartamide.

10. A use, process or composition as claimed in any one of the preceding claims wherein said polyamide is environmentally tolerable.

11. A use, process or composition as claimed in any one of the preceding claims wherein said polyamide is biodegradable.
